Europäisches Patentamt

European Patent Office

Office européen des brevets

(11) Numéro de publication: **0 296 037**
**A1**

(12) **DEMANDE DE BREVET EUROPEEN**

(21) Numéro de dépôt: **88401431.7**

(22) Date de dépôt: **10.06.88**

(51) Int. Cl.⁴: **E 04 B 1/94**

(30) Priorité: **10.06.87 FR 8708058**

(43) Date de publication de la demande:
**21.12.88 Bulletin 88/51**

(84) Etats contractants désignés:
**AT BE CH DE ES FR GB GR IT LI LU NL SE**

(71) Demandeur: **AIRCAL S.A.**
**14, avenue du Maréchal de Lattre de Tassigny**
**F-69330 Meyzieu (FR)**

(72) Inventeur: **Bomel, Paul**
**32, rue Garibaldi**
**F-69006 Lyon (FR)**

(74) Mandataire: **Derambure, Christian**
**BUGNION ASSOCIES 4 square Jean Moulin**
**F-73100 Aix les Bains (FR)**

(54) Film à bulles d'air, isolant thermique anti-feu, procédé de fabrication de ce film et dispositif pour la mise en oeuvre de ce procédé.

(57) L'invention concerne un film de matière synthétique renfermant des bulles (8), notamment des bulles d'air, régulièrement réparties, caractérisé en ce qu'au moins une (2) de ses faces (2,3) extérieures est formée d'une couche (4) continue de matériau ininflammable de protection extérieure contre les flammes. L'invention concerne également un produit isolant thermique anti-feu comprenant au moins une couche de film selon l'invention.

FIG. 1

**Description**

## FILM A BULLES D'AIR, ISOLANT THERMIQUE ANTI-FEU, PROCEDE DE FABRICATION DE CE FILM ET DISPOSITIF POUR LA MISE EN OEUVRE DE CE PROCEDE

L'invention concerne un film à bulles d'air et un isolant thermique anti-feu notamment pour l'isolation des bâtiments.

On connaît déjà des films à bulles d'air, notamment en polyéthylène. Ces films sont en général utilisés pour l'emballage ou encore à titre d'isolant thermique. Ces films à bulles d'air ont essentiellement pour avantage d'être légers, peu coûteux, et peu épais par rapport aux caractéristiques mécaniques et d'isolation thermique qu'ils procurent.

Cependant, ils ont essentiellement comme inconvénient d'une part d'être inflammables, d'autre part de s'altérer rapidement lorsqu'ils sont exposés aux rayonnements ultraviolets. En effet, les matières synthétiques dont ils sont constitués, notamment le polyéthylène, sont des matières qui ne résistent pas à la chaleur, s'enflamment facilement, et s'altèrent rapidement lorsqu'elles sont soumises aux rayonnements ultraviolets.

Par ailleurs, l'isolant thermique le plus couramment utilisé dans les bâtements est la laine de verre. Ce produit a essentiellement comme avantage d'être peu coûteux. Cependant, il a comme inconvénient d'être épais, lourd, inflammable et surtout délicat et désagréable à manipuler du fait des poussières de verre qu'il engendre dans son environnement. Ainsi, les personnes manipulant régulièrement la laine de verre ne doivent pas être allergiques à la poussière de verre, et, sont souvent sujettes à des irritations, voire des lésions.

Le brevet américain US-4 038 447 décrit une couverture d'isolation résistante à la flamme constituée d'un film à bulles replié sur lui-même selon une ligne longitudinale et recouvert ensuite d'une couverture en matériau synthétique formant une poche dont les bords latéraux sont assemblés par des agrafes laissant un libre passage d'air entre l'extérieur et l'intérieur. Des organes de maintien doivent être prévus pour maintenir assemblés en contact la couverture extérieure et le film à bulles replié. Un tel isolant est trop épais, trop complexe et ne procure pas une résistance suffisante à la flamme, malgré la présence d'adjuvents ignifugeants.

Par ailleurs, la demande de brevet européen 0 036 616 mentionne la possibilité d'utiliser une feuille d'aluminium dans une plaque résistant au feu. Mais le procédé de fabrication de cette plaque est trop complexe et coûteux et consiste à étendre des liquides et/ou des poudres et/ou des films successivement pour former une plaque multi-couches.

L'invention vise donc à remédier aux inconvénients connus des films à bulles d'air, à remédier aux inconvénients des isolants thermiques connus jusqu'à présent, et à procurer un procédé de fabrication simple et économique d'un tel film.

L'invention a pour objet de procurer un film à bulles d'air qui soit totalement inaltérable lorsqu'il est exposé aux rayonnements ultraviolets, et qui présente de bonnes caractéristiques de résistance à la flamme et à la chaleur.

L'invention a également pour objet de procurer un isolant thermique anti-feu, notamment pour l'isolation des bâtiments, qui soit léger, peu épais, inaltérable lorsqu'il est exposé aux rayons ultraviolets, suffisamment résistant à la flamme pour satisfaire aux normes exigées dans la construction des bâtiments, peu coûteux, et qui soit propre et facile à manipuler.

L'invention a aussi pour objet de fournir un procédé de fabrication d'un tel film à bulles pour réaliser un tel isolant thermique anti-feu qui soit simple à mettre en ouvre, éconimique et qui procure un grand débit de film en continu.

L'invention a aussi pour object de proposer un dispositif permettant la mise en oeuvre de ce procédé.

Pour ce faire, l'invention propose un film de matière synthétique renfermant des bulles , notamment des bulles d'air, régulièrement réparties, caractérisé en ce qu'il est constitué d'au moins une couche de matière synthétique à bulles et d'au moins une couche continue comportant de l'aluminium et qui est soudée sur au moins une des deux faces de la couche de matière synthétique à bulles. La couche de matière synthétique à bulles est, par exemple, une couche de polyéthylène ignifugé. La couche comportant de l'aluminium est une pellicule d'aluminium rapportée sur une pellicule de polyéthylène qui est soudée sur la couche de matière synthétique à bulles.

Un film selon l'invention est opaque aux rayonnements, réfléchit les rayonnements, et est étanche aux liquides et/ou aux gaz.

Par ailleurs, l'invention propose un isolant thermique anti-feu en forme de nappe, notamment pour l'isolation des bâtiments, caractérisé en ce qu'il est constitué d'au moins deux épaisseurs de film à bulles selon l'invention superposées l'une sur l'autre de façon que les couches d'aliminium forment les faces extérieures de l'isolant, les bords périphériques de ces couches d'aluminium étant associés l'un à l'autre en continu de façon à former une barrière étanche et une enceinte étanche autour des épaisseurs de film.

Les essais réalisés sur un isolant thermique anti-feu selon l'invention ont montré des caractéristiques de résistance à la flamme tout à fait suprenantes, notamment dans le cas où l'isolant est constitué de deux épaisseurs de film.

L'invention propose aussi un procédé de fabrication d'un film selon l'invention caractérisé en ce que l'on soude à chaud sans apport de matière en continu une couche continue comportant de l'aluminium et une base de matière synthétique, sur une des faces d'une couche de matière synthétique à bulles.

L'invention propose enfin un dispositif pour la mise en oeuvre de ce procédé caractérisé en ce qu'il comporte un tambour à creux sur lequel on enroule une bande de matière synthétique chaude issue d'un dispositif d'extrusion/laminage pour former des bulles avec cette bande, un rouleau plaquant et soudant une deuxième bande de matière synthétique chaude contre la première bande enroulée sur le tambour, et, à la sortie du tambour, des moyens permettant de plaquer et de souder une feuille d'aluminium sur la couche de matière synthétique à bulles encore chaude issue du tambour.

D'autres caractéristiques et avantages de l'invention apparaîtront à la lecture de la description suivant se référant aux figures annexées dans lesquelles :

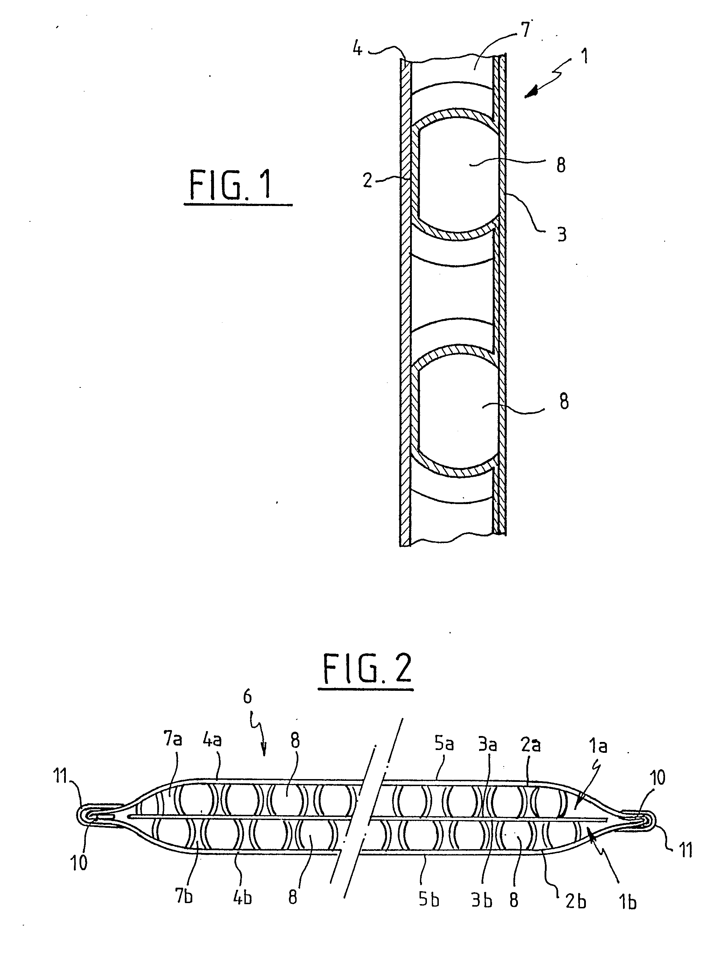

. La figure 1 est une vue schématique en coupe transversale d'une épaisseur du film à bulles d'air selon l'invention permettant de réaliser un isolant thermique anti-feu selon l'invention, les proportions en épaisseur étant exagérées et non conformes à la réalité pour plus de clarté.

. La figure 2 est une vue schématique en coupe transversale à moindre échelle que la figure 1, d'un mode de réalisation préférentiel d'un isolant thermique anti-feu selon l'invention.

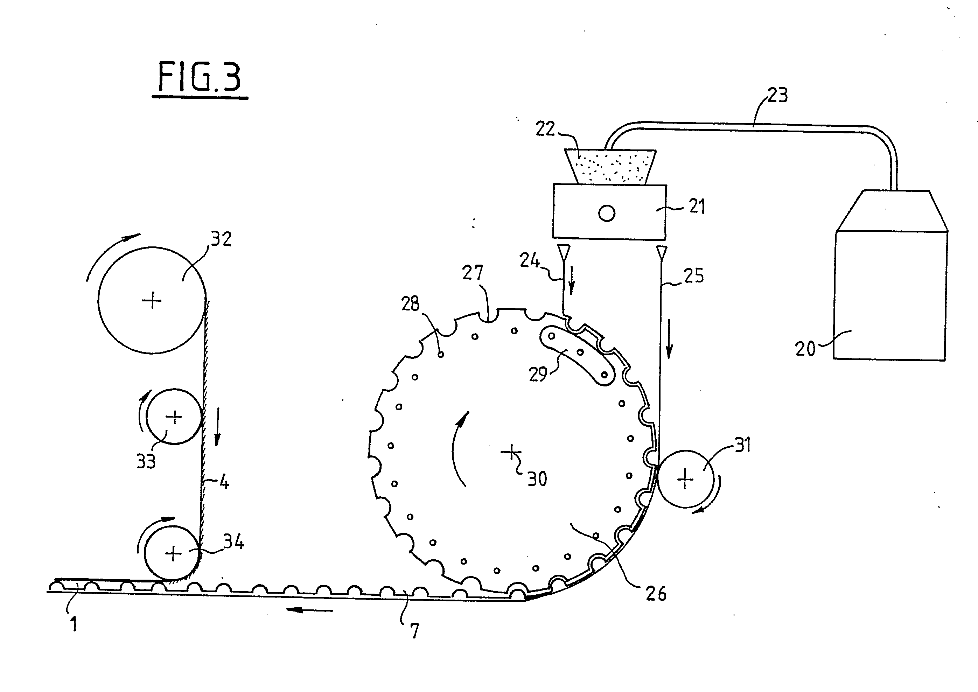

. La figure 3 est une vue schématique en élévation d'un dispositif permettant de fabriquer un film à bulles d'air selon l'invention.

L'invention concerne un film 1 de matière synthétique renfermant des bulles 8, notamment des bulles d'air, régulièrement réparties dans le film 1, caractérisé en ce qu'il est constitué d'au moins une couche 7 de matière synthétique à bulles et d'au moins d'une couche 4 continue de matériau ininflammable de protection extérieure contre les flammes. La matière synthétique constituant le film 1 et renfermant les bulles 8 est ignifugée. La couche 4 continue comporte de l'aluminium et est soudée sur au moins une des deux faces 2, 3 extérieures de la couche 7 de matière synthétique à bulles.

Selon l'invention, la couche 4 de matériau ininflammable est constituée d'une feuille d'aluminium rapportée sur la couche 7 de matière synthétique à bulles. En variante non représentée, la couche 4 de matériau ininflammable peut être incorporée à la couche 7 de matière synthétique à bulles. Par exemple, le matériau ininflammable 4 est constitué d'une poudre métallique incorporée à la couche 7 de matière synthétique à bulles.

De préférence, la couche 7 de matière synthétique à bulles est une couche de polyéthylène ignifugé. Dans le mode de réalisation représenté en figure 1, une seule 2 des deux faces 2, 3 extérieures de la couche 7 de matière synthétique est recouverte d'une couche 4 de matériau ininflammable. Cependant, selon les applications données au film 1 selon l'invention, on pourra prévoir que les deux faces extérieures du film soient formées d'une couche 4 de matériau ininflammable.

Selon une caractéristique importante de l'invention, une couche 4 de matériau ininflammable d'un film 1 selon l'invention est opaque aux rayonnements. De la sortie, ladite couche 4 de matériau ininflammable protège la couche 7 de matière synthétique des rayonnements, et, notamment des rayonnements ultra-violets. De préférence, la couche 4 de matériau ininflammable réfléchit les rayonnements.

Une couche 4 de matériau ininflammable d'un film 1 selon l'invention est étanche aux liquides et/ou aux gaz.

Comme on le verra ultérieurement, cette caractéristique augmente considérablement la résistance au feu d'un film 1 selon l'invention.

Une couche 4 de matériau ininflammable d'un film 1 selon l'invention est constituée d'une feuille d'aluminium 4 associée rigidement et directement à la couche 7 de matière synthétique.

La couche 4 de matériau inflammable est associée à la couche 7 de matière synthétique par soudure à chaud sans apport de matière. Le film 1 représenté comporte une seule couche 7 de matière synthétique à bulles, chaque bulle 8 ayant une épaisseur voisine de celle de la couche 7 de matière synthétique et une seule couche 4 d'aluminium soudée sur une face de la couche 7 de matière synthétique à bulles. Ainsi la couche 7 de matière synthétique est constituée d'une seule couche de bulles 8. Bien entendu, il est aussi possible de réaliser un film 1 selon l'invention avec une couche 7 de matière synthétique comportant plusieurs couches successives de bulles 8, ou, plus généralement, avec toute couche 7 de matière synthétique à bulles.

Dans le mode de réalisation préférentiel représenté sur la figure 1, une couche 4 de matériau ininflammable d'un film 1 selon l'invention a une épaisseur inférieure à la moitié de celle du film 1, notammen, inférieure au dixième de l'épaisseur de la couche 7 de matière synthétique à bulles. Ainsi, la majeure partie de l'épaisseur du film 1 selon l'invention est constituée par la couche 7 de matière synthétique, de préférence de polyéthylène ignifugé, à bulles.

Un film 1 selon l'invention est donc constitué d'une couche 7 de polyéthylène ignifugé à bulles et d'une couche 4 d'aluminium rapportée par soudure sur une face extérieure 2 de la couche 7 de polyéthylène à bulles. Selon l'invention, la couche 7 de matière synthétique à bulles est constituée d'une bande 25 de support des bulles et d'une bande 24 rapportée par soudure sur la nappe 25 de support pour former les bulles 8 qui s'étendent transversalement d'un côté de la bande 25 de support, et la couche 4 d'aluminium est constituée d'une pellicule de matière synthétique de même nature que celle formant les bulles 8 à l'opposé de la bande 25 de support et ayant sa face extérieure formée d'aluminium. La couche 4 d'aluminium est constituée d'une pellicule d'aluminium rapportée sur une pellicule de polyéthylène qui est elle-même soudée au contact des bulles 8 formées de polyéthylène ignifugé.

Un film 1 selon l'invention a, de façon surprenante, une résistance à la flamme très importante. On sait en effet que le polyéthylène est habituellement sensible à la chaleur et inflammable. De plus, même lorsqu'il est ignifugé par des adjuvants appropriés, le polyéthylène fond ou subit un fluage, ou se consume lorsqu'il est soumis à une chaleur intense. Par conséquent, ce produit n'était pas utilisé jusqu'à maintenant de façon intensive pour les applications où les risques d'incendie sont grands et peuvent avoir des conséquences graves. L'inventeur a au contraire déterminée qu'un film 1 selon l'invention pouvait être employé dans de telles applications sans danger.

Un film 1 selon l'invention peut être réalisé par extrusion d'une couche 7 de polyéthylène ignifugé à bulles d'air et application d'une feuille d'aluminium 4 sur une au moins deux des deux faces 2, 3 de cette couche 7 de polyéthylène à bulles. L'application de la feuille d'aluminium 4 se fait en continu simultanément à l'extrusion également continue de la couche 7 de polyéthylène à bulles d'air. Dans un procédé selon l'invention, on soude à chaud sans apport de matière en continu une couche 4 continue comportant de l'aluminium et une base de matière synthétique, sur une des faces 2, 3 d'une couche 7 de matière synthétique à bulles. On soude la couche 4 d'aluminium en continu simultanément à l'extrusion continue de la couche 7 de matière synthétique à bulles. Les adjuvants permettant de rendre le polyéthylène ignifugé, c'est-à-dire d'éviter qu'il ne coule ou qu'il ne s'enflamme au contact d'une flamme sont connus. On peut par exemple employer l'adjuvant AL 50 commercialisé par la société française SCHULMAN.

Ainsi, dans un procédé selon l'invention, on extrude à chaud simultanément deux bandes 24, 25 de polyéthylène, on forme des bulles avec une 24 des deux bandes en l'appliquant sur un tambour 26 à creux 27, on plaque et on soude à chaud en continu la deuxième bande 25 sur la première 24 pour former une couche 7 de polyéthylène à bulles, on chauffe une feuille d'aluminium 4 constituée d'une pellicule d'aluminium rapportée sur une pellicule de polyéthylène à une température suffisante pour permettre l'adhésion directe de cette pellicule de polyéthylène sur la couche 7 de polyéthylène à bulles encore chaude à la sortie du tambour 26, puis on applique en continu la pellicule de polyéthylène de la feuille d'aluminium 4 en contact sur une face 2 de la couche 7 de polyéthylène à bulles afin de souder à chaud et en continu cette feuille d'aluminium 4 sur la couche 7 de polyéthylène à bulles, la pellicule d'aluminium étant tournée vers l'extérieur. On applique la feuille d'aluminium 4 sur la face 2 libre extérieure de la première bande 24 formant les bulles, l'autre face extérieure 3 du film étant constituée par la deuxième bande 25 de support.

La figure 3 représente un dispositif pour la mise en oeuvre d'un procédé de fabrication d'un film 1 selon l'invention. Le polyéthylène en billes est mélangé dans un silo mélangeur 20 aux adjuvants permettant de l'ignifuger et aux autres additifs éventuels (colorants ...). On mélange par exemple 95% de polyéthylène avec 3% d'AL 50 et 2% de colorants. Le dispositif selon l'invention est caractérisé en ce qu'il comporte un tambour 26 à creux 27 sur lequel on enroule une bande 24 de polyéthylène chaud, issue d'un dispositif d'extrusion/laminage 21 pour former des bulles avec cette bande 24, un rouleau 31 plaquant et soudant une deuxième bande 25 de matière synthétique chaude, notamment de polyéthylène chaud, contre la première bande 24 enroulée sur le tambour 26. Le dispositif selon l'invention comporte un tambour 32 d'alimentation sur lequel la feuille d'aluminium 4 est enroulée, et des moyens 33 de préchauffage de la feuille d'aluminum 4 disposés entre le tambour 32 d'alimentation et les moyens 34 permettant de plaquer et de souder la feuille d'aluminium 4 sur la couche 7 de matière synthétique à bulles en sortie du tambour 26. Les moyens 33 de préchauffage sont constitués d'un rouleau 33 maintenu chaud et venant en contact de la feuille d'aluminium 4, notamment au contact d'une pellicule d'aluminium de cette feuille 4 pour chauffer une pellicule de polyéthylène de cette feuille 4 à travers la pellicule d'aluminium.

Le dispositif d'extrusion/laminage 21 à vis sans fin est alimenté par une trémie 22 et un canal 23, en polyéthylène mélangé issu du silo 20. Deux bandes 24, 25 de polyéthylène chaud, de même largeur constante, sont issues simultanément du dispositif 21 unique d'extrusion/laminage pour alimenter le tambour 26 comportant des creux 27 sur sa surface extérieure pour former les bulles avec l'une 24 des bandes de polyéthylène. Les creux 27 communiquent avec des canaux 28 qui passent successivement en regard d'une bouche d'aspiration d'air 29 reliée à une pompe à vide. La bouche 29 ne tourne pas et reste en regard de l'arrivée de la bande 24 sur le tambour 26. Le tambour 26 tourne autour de son axe 30. La deuxième bande 25 de polyéthylène chaud est plaquée sur la première bande 24 formant les bulles par un rouleau 31, ce qui permet de souder ces deux bandes 24, 25 et de réaliser la couche 7 de polyéthylène ignifugé à bulles en sortie du tambour 26. La bande 24 formant les bulles étant légèrement étirée dans les creux 27 par aspiration d'air a de préférence une épaisseur légèrement supérieure à celle de la bande 25 à la sortie de l'extrudeuse/lamineuse 21. Par exemple, la bande 24 a une épaisseur de 50μm et la bande 25 a une épaisseur de 45μm.

A la sortie du tambour 26, la couche 7 de polyéthylène ignifugé est recouverte sur une 2 de ses faces d'une couche 4 de matériau ininflammable constituée d'une feuille d'aluminium contrecollée sur une bande de polyéthylène standard ou ignifugé. La fuille 4 d'aluminium contrecollée de polyéthylène est enroulée sur le tambour d'alimentation 32. Elle est préchauffée contre le rouleau 33 de préchauffage maintenu chaud. Le rouleau 33 de préchauffage est en contact avec l'aluminum. La feuille 4 d'aluminium chaud est ensuite plaquée et soudée sur la couche 7 de polyéthylène à bulles encore chaude à la sortie du tambour 26 par un rouleau 34. On obtient un film 1 selon l'invention tel que représenté en figure 1.

La couche 4 de matériau ininflammable est ainsi associée rigidement et directement au film 1 isolant en matière synthétique ignifugée, par exemple par soudure à chaud sans apport de matière et en continu simultanément à l'extrusion du film isolant. La réalisation d'une telle soudure à chaud est particulièrement simple et avantageuse lorsque la couche 4 de matériau ininflammable est formée d'une feuille d'aluminium 4 constituée d'une pellicule d'aluminium rapportée sur une pellicule synthétique telle que le polyéthylène, comme c'est généralement le cas. La feuille d'aluminium 4 est alors chauffée à une température suffisante pour permettre l'adhésion directe de sa pellicule de polyéthylène sur la couche 7 à bulles d'air en polyéthylène ignifugé extrudé encore chaude sur laquelle elle est appliquée. la fabrication du film 1 selon l'invention est ainsi particulièrement simple et économique (figure 3).

En variante, on pourra aussi incorporer du métal en poudre, tel que de l'aluminium en poudre sur la surface extérieure de la couche 7 de polyéthylène ignifugé à bulles encore chaude. La couche 4 de matériau ininflammable est alors incorporée à la couche 7 de polyéthylène ignifugé à bulles.

Par ailleurs, l'inventeur a déterminé que la superposition de deux épaisseurs 1 de film selon l'invention -notamment de deux épaisseurs 1a, 1b de film de polyéthylène ignifugé à bulles d'air recouvert d'une feuille d'aluminium 4a, 4b sur une face 2a, 2b-, de sorte que les feuilles d'aluminium 4 constituent les faces extérieures 5a, 5b (figure 2), procure un matériau particulièrement résistant à la flamme.

Parmi les différentes applications avantageuses d'un film 1 selon l'invention, l'inventeur a déterminé que le film 1 selon l'invention pouvait être utilisé à titre d'isolant thermique anti-feu, notamment dans la construction des bâtiments.

Plus généralement, l'invention concerne un isolant thermique anti-feu 6 en forme de nappe, notamment pour l'isolation des bâtiments, caractérisé en ce qu'il est constitué d'au moins deux épaisseurs 1a, 1b de film à bulles selon l'invention superposées l'une sur l'autre de façon que les couches 4a, 4b d'aluminium de ces épaisseurs 1a, 1b forment les faces extérieures de l'isolant, les bords périphériques de ces deux couches 4a, 4b d'aluminium étant associés l'une à l'autre ou continu de façon à former une barrière étanche et une enceinte étanche autour des épaisseurs 1a, 1b de film.

Selon l'invention, le film 1 à bulles est en matière synthétique ignifugée à bulles, par exemple en polyéthylène ignifugé à bulles d'air, et les couches 4 d' aluminium sont constituées chacune d'une feuille d'aluminium 4 formant au moins une des deux faces extérieures du film 1.

Sur la figure 1, une seule des faces du film 1 isolant est formée d'une couche 4 d'aluminium et sur la figure 2, l'isolant 6 est constitué de deux épaisseurs 1a, 1b de film.

Un isolant 6 selon l'invention est caractérisé en ce que ses deux faces extérieures 5a, 5b au moins sont formeés d'une couche 4a, 4b continue d'aluminium (figure 2). De plus, l'isolant 6 se présentant généralement à l'état brut sous forme de nappe ou de bande de largeur déterminée, ses bords extérieurs longitudinaux 10 au moins comportent, selon l'invention, des moyens assurant l'étanchéité au moins entre les deux couches de matériau ininflammable 4a, 4b extérieures étanches aux liquides et/ou aux gaz de façon à définir une enceinte étanche au moins par ses bords longitudinaux 10 aux liquides et/ou aux gaz, autour des épaisseurs 1 de film isolant. Par exemple, les deux bords longitudinaux 10 des deux couches 4a, 4b de matériau ininflammable qui forment le même bord longitudinal 10 de l'isolant 6 sont associés l'un à l'autre à chevauchement l'un sur l'autre. Les deux bords longitudinaux 10 sont recouverts d'une bande adhésive 11 et/ou pliés selon une ligne longitudinale. L'étanchéité ainsi obtenue, combinée à l'utilisation de couches 4a,4b de matériau ininflammable extérieures également étanches, offrent de nombreux avantages. Tout d'abord, la couche 7 interne de matière synthétique ignifugée, si elle vient à fondre ou à se détériorer sous l'effet de la chaleur, ne coule pas et ne sort pas de l'enceinte étanche réalisée par les couches 4a, 4b ininflammables par les bords longitudinaux 10. Après découpage à longueur d'un nappe d'isolant 6, on peut aussi souder les bords transversaux comme les bords longitudinaux 10 .On évite ainsi la propagation de l'incendie par coulage de la matière synthétique. Le produit isolant 6 selon l'invention reste intègre et son altération éventuelle intérieure n'influence pas l'environnement extérieur. De plus, les gaz nocifs et/ou inflammables dégagés par la fusion ou la détérioration de la matière synthétique restent emprisonnés dans l'enceinte étanche et ne participent pas non plus à la propagation de l'incendie. A l'inverse, les fluides chauds ou agressifs extérieurs ne peuvent pas pénétrer à l'intérieur de l'enceinte étanche et détruire prématurément la couche 7 interne de matière synthétique.

Par ailleurs, la matière synthétique ignifugée de l'isolant 6 selon l'invention ne vient jamais au contact direct d'une flamme.

L'isolant 6 selon l'invention est constitué de plusieurs épaisseurs 1a, 1b de film islant superposées les unes sur les autres et associées les unes aux autres par leurs bords périphériques longitudinaux 10. Chaque épaisseur 1a, 1b est constituée d'une couche isolante 7 à bulles recouverte sur au moins une 2 de ses deux faces 2, 3 de revêtement infinflammable 1 d'aluminium Les deux épaisseurs 1a, 1b sont en contact l'une avec l'autre, mais une légère quantité d'air peut être intercalée entre ces épaisseurs 1a, 1b.

Sur la figure 2, l'isolant 6 selon l'invention est constitué de deux épaisseurs 1a, 1b de film isolant dont une seule des deux faces extérieures est formée d'une couche 4a, 4b d'aluminium . Les deux épaisseurs 1a, 1b sont superposées l'une sur l'autre "tête-bêche" de façon que les couches 4a, 4b **d'aluminium** soient tournées vers l'extérieur et constituent les faces extérieures 5a, 5b de l'isolant 6. Les couches isolantes 7a, 7b à bulles sont en regard l'une de l'autre par leur face 3a, 3b opposées aux couches 4a, 4b d'aluminium. Les bords longitudinaux 10 en regard des épaisseurs 1a, 1b sont associés l'un à l'autre rigidement en continu et de façon étanche les uns aux autres, par exemple par chevauchement puis soudure à chaud l'un sur l'autre et/ou application d'une bande adhésive 11 recouvrant les bords 10 se chevauchant, et/ou de pliage étanche selon une ligne de pliage longitudinale pour former une barrière.

Les bulles 8 du film à bulles sont de préférence des bulles d'air, ou des bulles de gaz carbonique, ou des bulles de gaz ignifuge, ou autres.

Les bulles 8 du film 1 selon l'invention ont avantageusement un diamètre compris entre 5mm et 25mm, notamment de l'ordre de 11mm. La couche 7 isolante de matière synthétique à bulles a avantageusement une épaisseur comprise entre 3mm et 10mm, notamment de l'ordre de 4mm. La densité surfacique des bulles 8 du film 1 selon l'invention est avantageusement comprise entre 10 000 et 1 500 bulles par mètre carré de film 1, notamment 7 200 bulles par mètre-carré. Un film 1 isolant selon l'invention a avantageusement une épaisseur comprise entre 4mm et 13mm, notamment de l'ordre de 4,5mm. L'isolant 6 selon l'invention a avantageusement une épaisseur totale inférieure à 30mm, notamment de l'ordre de 10mm.

Des essais ont été menés et ont montré de façon surprenante qu'un isolant 6 selon l'invention a une résistance importante vis-à-vis du feu, procure une isolation excellente et a une durée de vie supérieure à dix ans. De ce fait, un tel isolant 6 peut être utilisé dans la construction des bâtiments, par exemple dans les habitations.

L'invention peut faire l'objet de nombreuses variantes évidentes à l'homme du métier, notamment en ce qui concerne la taille des bulles, les caractéristiques de la matière synthétique employée, le nombre d'épaisseurs 1a, 1b superposées, la matière et l'épaisseur des couches 4 de matériau ininflammable.

## Revendications

1/ Film de matière synthétique renfermant des bulles, notamment des bulles d'air, régulièrement réparties, caractérisé en ce qu'il est constitué d'au moins une couche (7) de matière synthétique à bulles et d'au moins une couche (4) continue comportant de l'aluminium et qui est soudée sur au moins une des deux faces (2, 3) de la couche (7) de matière synthétique à bulles.

2/ Film selon la revendication 1, caractérisé en ce qu'il est constitué d'une couche (7) de polyéthylène ignifugé à bulles et d'une couche (4) d'aluminium rapportée par soudure sur une face extérieure (2) de la couche (7) de polyéthylène à bulles.

3/ Film selon l'une quelconque des revendications 1 et 2, caractérisé en ce que la couche (7) de matière synthétique à bulles est constituée d'une bande (25) de support des bulles et d'une bande (24) rapportée par soudure sur la nappe (25) de support pour former les bulles (8) qui s'étendent transversalement d'un côté de la bande (25) de support, et en ce que la couche (4) d'aluminium est constituée d'une pellicule de matière synthétique de même nature que celle formant les bulles (8), est qui est soudée sur les bulles (8) à l'opposé de la bande (25) de support et ayant sa face extérieure formée d'aluminium.

4/ Film selon l'une quelconque des revendications 1 à 3, caractérisé en ce que la couche (4) d'aluminium est constituée d'une pellicule d'aluminium rapportée sur une pellicule de polyéthylène que est elle-même soudée au contact des bulles (8) formées de polyéthylène ignifugé.

5/ Film selon la revendication 4, caractérisé en ce que la couche (4) d'aluminium est constituée d'aluminium en poudre incorporé à chaud à la couche (7) de matière synthétique à bulles.

6/ Film selon l'une quelconque des revendications 1 à 4, caractérisé en ce que la couche (4) d'aluminium est associée à la couche (7) de matière synthétique à bulles par soudure à chaud sans apport de matière.

7/ Film selon l'une quelconque des revendications 1 à 6 caractérisé en ce qu'il comporte une seule couche (7) de matière synthétique à bulles, chaque bulle (8) ayant une épaisseur voisine de celle de cette couche (7), et une seule couche (4) d'aluminium soudée sur une face de la couche (7) de matière synthétique à bulles.

8/ Film selon l'une quelconque des revendications 1 à 7, caractérisé en ce que la couche (4) d'aluminium a une épaisseur inférieure à la moitié de celle du film (1), notamment inférieure au dixième de l'épaisseur de la couche (7) de matière synthétique à bulles.

9/ Film selon l'une quelconque des revendications 1 à 8, caractérisé en ce que les bulles (8) ont un diamètre compris entre 5mm et 25 mm, notamment de l'ordre de 11 mm.

10/ Film selon l'une quelconque des revendications 1 à 9, caractérisé en ce qu'il comporte entre 10 000 et 1 500 bulles (8) par $m^2$, notamment 7 200 bulles (8) par $m^2$.

11/ Film selon l'une quelconque des revendications 1 à 10, caractérisé en ce que la couche (7) de matière synthétique à bulles a une épaisseur comprise entre 3 mm et 10 mm, notamment de l'ordre de 4mm.

12/ Film selon l'une quelconque des revendications 1 à 11 caractérisé en ce qu'il a une épaisseur comprise entre 4 mm et 13 mm, notamment de l'ordre de 4.5 mm.

13/ Isolant thermique anti-feu en forme de nappe, notamment pour l'isolation des bâtiments, caractérisé en ce qu'il est constitué d'au moins deux épaisseurs (1a, 1b) de film à bulles selon l'une quelconque des revendications 1 à 12 superposées l'une sur l'autre de façon que les couches (4a, 4b) d'alumi nium de ces épaisseurs (1a, 1b) de film à bulles forment les faces extérieures de l'isolant, les bords périphériques de ces deux couches (4a, 4b) d'aluminium étant associés l'un à l'autre en continu de façon à former une barrière étanche et une enceinte étanche autour des épaisseurs (1a, 1b) de film.

14/ Isolant selon la revendication 13, caractérisé en ce qu'il est constitué de deux épaisseurs (1a, 1b) de film superposées dont les bords longitudinaux (10) en regard sont associés l'un à l'autre rigidement en continu et de façon étanche, notamment par chevauchement puis soudure l'un sur l'autre et/ou application d'une bande adhésive (11) recouvrant les bords

(10) se chevauchant et/ou pliage selon une ligne longitudinale pour former une barrière étanche.

15/ Isolant selon l'une quelconque des revendications 13 à 14, caractérisé en ce qu'il a une épaisseur totale inférieure à 30 mm notamment de l'ordre de 10 mm.

16/ Procédé de fabrication d'un film de matière synthétique à bulles selon l'une quelconque des revendications 1 à 12 caractérisé en ce que l'on soude à chaud sans apport de matière en continu une couche (4) continue comportant de l'aluminium et une base de matière synthétique, sur une des faces (2, 3) d'une couche (7) de matière synthétique à bulles.

17/ Procédé selon la revendication 16, caractérisé en ce que l'on soude la couche (4) d'aluminium en continu simultanément à l'extrusion continue de la couche (7) de matière synthétique à bulles.

18/ Procédé selon l'une quelconque des revendications 16 et 17, caractérisé en ce que l'on extrude à chaud simultanément deux bandes (24, 25) de polyéthylène, on forme des bulles avec une (24) des deux bandes en l'appliquant sur un tambour (26) à creux (27), on plaque et on soude à chaud en continu la deuxième bande (25) sur la première (24) pour former une couche (7) de polyéthylène à bulles, on chauffe une feuille d'aluminium (4) constituée d'une pellicule d'aluminium rapportée sur une pellicule de polyéthylène à une température suffisante pour permettre l'adhésion directe de cette pellicule de polyéthylène sur la couche (7) de polyéthylène à bulles encore chaude à la sortie du tambour (26), puis on applique en continu la pellicule de polyéthylène de la feuille d'aluminium (4) en contact sur une face (2) de la couche (7) de polyéthylène à bulles afin de souder à chaud et en continu cette feuille d'aluminium (4) sur la couche (7) de polyéthylène à bulles, la pellicule d'aluminium étant tournée vers l'extérieur.

19/ Procédé selon la revendication 18, caractérisé en ce que l'on applique la feuille d'aluminium (4) sur la face (2) libre extérieure de la première bande (24) formant les bulles, l'autre face extérieure (3) du film étant constituée par la deuxième bande (25) de support.

20/ Dispositif pour la mise en oeuvre du procédé de fabrication selon l'une quelconque des revendications 16 à 19, caractérisé en ce qu'il comporte un tambour (26) à creux (27) sur lequel on enroule une bande (24) de matière synthétique chaude, notamment de polyéthylène chaud, issue d'un dispositif d'extrusion/laminage (21) pour former des bulles avec cette bande (24), un rouleau (31) plaquant et soudant une deuxième bande (25) de matière synthétique chaude, notamment de polyéthylène chaud, contre la première bande (24) enroulée sur le tambour (26), et, à la sortie du tambour (26), des moyens (34) permettant de plaquer et de souder une feuille d'aluminium (4) sur la couche (7) de matière synthétique à bulles encore chaude issue du tambour (26).

21/ Dispositif selon la revendication 20 caractérisé en ce qu'il comporte un tambour (32) d'alimentation sur lequel la feuille d'aluminium (4) est enroulée, et des moyens (33) de préchauffage de la feuille d'aluminium (4) disposés entre le tambour (32) d'alimentation et les moyens (34) permettant de plaquer et de souder la feuille d'aluminium (4) sur la couche (7) de matière synthétique à bulles en sortie du tambour (26).

22/ Dispositif selon la revendication 21, caractérisé en ce que les moyens (33) de préchauffage sont constitués d'un rouleau (33) maintenu chaud et venant en contact de la feuille d'aluminium (4), notamment au contact d'une pellicule d'aluminium de cette feuille (4) pour chauffer une pellicule de polyéthylène de cette feuille (4) à travers la pellicule d'aluminium.

23/ Dispositif selon l'une quelconque des revendications 20 à 22 caractérisé en ce qu'il comporte un dispositif unique d'extrusion/laminage (21) duquel les deux bandes (24, 25) sont issues simultanément.

0296037

FIG.1

FIG.2

# FIG.3

0296037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 038 447 (BROCK)<br>* Colonne 2, lignes 37-47; colonne 2, ligne 55 - colonne 3, ligne 26; colonne 4, lignes 4-7,19-60; figures 1-4 *<br>--- | 1-3,13, 14 | E 04 B 1/94 |
| A | EP-A-0 036 616 (TAKEDA CHEMICAL IND.)<br>* Revendications 1,2,8 *<br>----- | 1,2 | |

DOMAINES TECHNIQUES
RECHERCHES (Int. Cl.4)

E 04 B

Le présent rapport a été établi pour toutes les revendications

| Lieu de la recherche | Date d'achèvement de la recherche | Examinateur |
|---|---|---|
| LA HAYE | 19-09-1988 | LAUE F.M. |